# FASCICULE DE BREVET EUROPEEN

(11) **EP 1 893 542 B1**
(45) Date de publication et mention de la délivrance du brevet: **02.08.2017**
(21) Numéro de dépôt: 06761957.7
(22) Date de dépôt: 01.06.2006
(51) Int. Cl.: C03C 17/04, G04B 19/06

(54) **PIECE TECHNIQUE OU DECORATIVE ASSOCIANT UN MATERIAU TRANSPARENT ET UN MATERIAU AMORPHE A BASE DE SILICE ET SON PROCEDE DE FABRICATION**
TECHNISCHES ODER DEKORATIVES TEIL MIT EINER KOMBINATION AUS EINEM TRANSPARENTEN MATERIAL UND EINEM AUF SILICIUMDIOXID BASIERENDEN AMORPHEN MATERIAL UND HERSTELLUNGSVERFAHREN DAFÜR
TECHNICAL OR DECORATIVE COMPONENT ASSOCIATING A TRANSPARENT MATERIAL AND A SILICA-BASED AMORPHOUS MATERIAL AND METHOD FOR MAKING SAME

(30) Priorité: 14.06.2005 EP 05012785; 03.04.2006 CH 5522006
(43) Date de publication de la demande: 05.03.2008
(73) Titulaire: The Swatch Group Research and Development Ltd., 2074 Marin (CH)
(72) Inventeur: DERRIEY, Gilles, F-25500 Morteau (FR); VERDON, Christian, CH-1034 Boussens (CH); BOURBAN, Stewes, CH-1588 Cudrefin (CH); POLI, Giancarlo, CH-2206 les Geneveys-sur-Coffrane (CH)
(74) Mandataire: Ravenel, Thierry Gérard Louis
(86) Numéro de dépôt international: PCT/EP2006/005227
(87) Numéro de publication internationale: WO 2006/133810

(56) Documents cités:
- FR-A- 2 750 419
- FR-A- 2 857 007
- GB-A- 2 032 657
- US-A- 5 618 585
- US-A1- 2002 184 920
- US-B1- 6 207 285
- US-B1- 6 525 300
- PATENT ABSTRACTS OF JAPAN vol. 002, no. 090 (E-045), 22 juillet 1978 (1978-07-22) & JP 53 053360 A (SEIKO INSTR & ELECTRONICS LTD), 15 mai 1978 (1978-05-15)

## Description

### DOMAINE TECHNIQUE

La présente invention a pour objet une pièce technique ou décorative associant un matériau transparent résistant à une température supérieure à 500°C et un matériau à base de silice. Elle concerne plus particulièrement une telle pièce comportant des dépôts d'émail. L'invention sera illustrée à titre d'exemple par le cadran d'une pièce d'horlogerie dont on pourra modifier l'aspect esthétique, et/ou qui pourra être structuré pour rendre visibles des parties du mouvement ou des informations affichées sous le cadran.

### ARRIERE PLAN TECHNOLOGIQUE

On connaît depuis longtemps des montres à mouvement mécanique, dites « montres-squelettes ». Un brevet suisse CH 28539 décrit une montre dans laquelle le cadran est réalisé en une matière transparente telle que du verre, du mica, ou du celluloïd et permet de voir le mécanisme du mouvement, et les platines et ponts en métal. Les index horaires sont rapportés par tout moyen sur la surface visible du cadran. Les brevets US 4 534 660 et CH 690 518 décrivent des montres encore plus « squelette ». Dans le brevet US 4 534 660, la plaque supérieure formant la glace, les platines et les ponts, et la plaque de fond constituent un empilement en un matériau cristallin tel que le saphir, lesdites plaques étant usinées avec des ouvertures ou des évidements pour loger les pièces du mouvement, de façon à rendre visible tout le mécanisme de la montre. Le brevet CH 690 518 vise le même but, mais avec une cage de montage transparente monobloc réalisée par usinage ultrason au moyen d'une sonotrode. Dans ce dernier document il est conseillé de reporter les index horaires sur la lunette pour augmenter l'effet esthétique.

Les documents US 5 618 585 et FR 2 750 419 décrivent des procédés d'émaillage de substrats transparents, ayant une forme généralement plane, ces émaillages étant effectuées sur les surfaces planes du substrat.

Entre l'art antérieur le plus ancien où le cadran est entièrement opaque et l'art antérieur précité ou il est entièrement transparent, à l'exception de quelques zones de marquage, il n'existe pas de solutions intermédiaires permettant d'avoir des zones assez étendues opaques et les zones complémentaires transparentes ou inversement. L'enseignement de cet art antérieur ne permet pas non plus de créer des nuances de couleur à la surface du cadran.

### RESUME DE L'INVENTION

La présente invention vise donc à pallier les inconvénients de l'art antérieur précité en procurant une pièce dans laquelle l'association de deux matériaux n'ayant à la meilleure connaissance de la demanderesse jamais été utilisés ensemble pour produire un résultat technique ou un effet décoratif en pouvant créer dans ladite pièce des zones transparentes, opaques ou translucides, colorées ou non.

A cet effet, l'invention a pour objet une pièce à usage technique et/ou décoratif selon la revendication 1.

Le matériau transparent résistant à une température supérieure à 500°C peut être un matériau mono ou polycristallin par exemple un quartz, un spinelle ou un corindon, notamment le saphir. On peut également employer un matériau amorphe, tel qu'un verre minéral dans la mesure où son point de ramollissement est supérieur à la température nécessaire pour effectuer le dépôt d'émail.

Selon une autre caractéristique de l'invention, des couches supplémentaires d'émail sont déposées dans des évidements usinés dans au moins une face du substrat, les parties n'ayant pas d'évidements pouvant également être recouvertes de couches d'émail, ou au contraire laissées nues, et donc être transparentes.

Selon encore une autre caractéristique de l'invention les couches d'émail peuvent être épaisses et, ou au contraire minces ou ultra-minces et translucides, voire transparentes, ou opaques en fonction des pigments entrant dans la composition de l'émail.

Selon encore d'autres caractéristiques de l'invention des couches d'émail de couleurs différentes peuvent être prévues dans les deux faces du substrat transparent voir dans la gorge. Lorsque les couches sont translucides et présentent des zones de recouvrement, cela permet d'obtenir une couleur ou une teinte supplémentaire.

### BREVE DESCRIPTION DES DESSINS

D'autres caractéristiques et avantages de la présente invention apparaîtront dans la description suivante de plusieurs modes de réalisation, donnés à titre illustratif et non limitatif, en référence aux dessins annexés dans lesquels:
- la figure 1 représente en vue de dessus une montre-bracelet incorporant une pièce décorative et technique selon l'invention;
- les figures 2 à 5 représentent selon la coupe IV-IV de la figure 1 les différentes étapes d'un premier mode de réalisation;
- la figure 6 représente en coupe un deuxième mode de réalisation;
- la figure 7 représente en coupe un troisième mode de réalisation;
- la figure 8 représente en coupe un quatrième mode de réalisation, et
- la figure 9 représente en coupe un cinquième mode de réalisation.

### DESCRIPTION DETAILLEE DE L'INVENTION

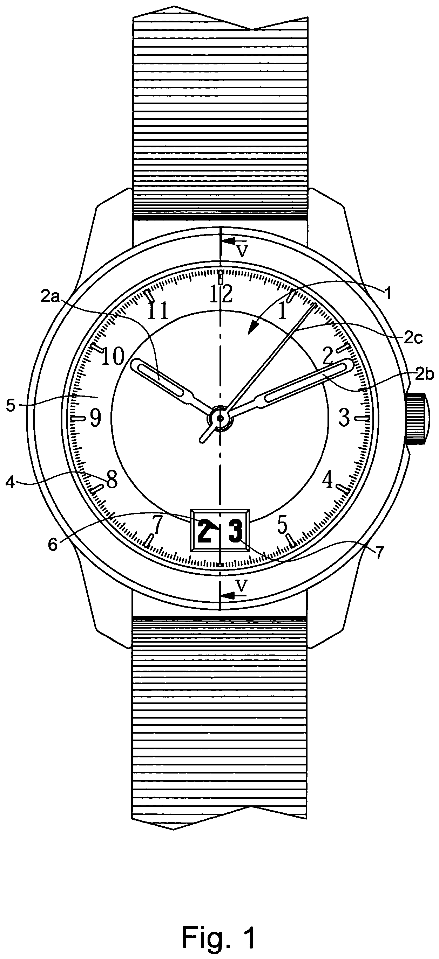

En se référant d'abord aux figures 1 à 5 on décrit ci-après un premier example de réalisation d'une pièce utilisée pour former le cadran 1 d'une montre bracelet à affichage analogique au moyen d'aiguilles d'heures 2a, de minutes 2b et de secondes 2c se déplaçant en regard d'index horaires 4 inscrits sur un tour d'heures 5. Dans l'exemple représenté, le cadran 1 comporte un guichet 6 traversant toute l'épaisseur du cadran 1 et en dessous duquel se déplace un disque de quantième 7.

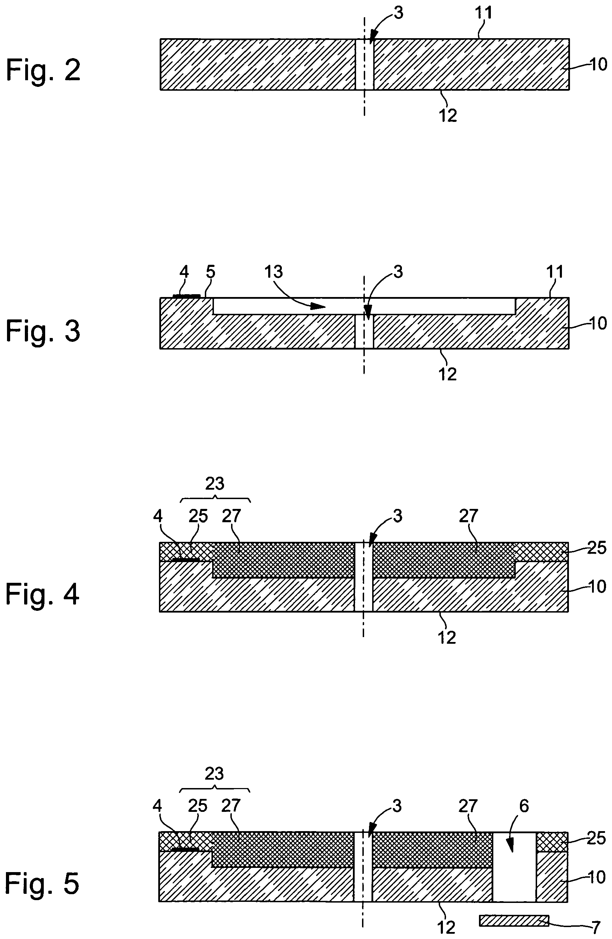

Le cadran 1 est représenté en coupe à la figure 4 selon la ligne 6h - 12h, l'échelle selon l'épaisseur étant fortement exagérée pour une meilleure compréhension des dessins. Le cadran est formé par un substrat transparent 10 ayant une face supérieure 11 orientée vers un observateur, la face inférieure étant désignée par la référence 12.

Le substrat transparent 10 représenté à la figure 2 est découpé aux dimensions du cadran dans une plaque ayant une épaisseur comprise entre 0,4 et 0,9 mm, le matériau constituant ladite plaque devant pouvoir résister à des températures supérieures à 500°C, de préférence à des températures comprises entre 700°C et 1300°C. Le substrat 10 est percé en son centre d'un trou 3 pour le passage des canons des aiguilles 2a, 2b, 2c, par des moyens connus par exemple à la meule ou à ultrasons avec une sonotrode. De façon équivalente, le trou peut être exécuté dans une dernière étape de fabrication du cadran.

Comme représenté à la figure 3, on usine dans la face supérieure 11 du substrat transparent 10 un évidemment 13 correspondant au disque situé à l'intérieur du tour d'heures 5, ledit évidemment ayant par exemple une profondeur de 0,2 mm. Dans le cas d'un substrat transparent 10 en saphir, l'évidemment 13 est réalisé par abrasion mécanique (lamage, gravage) avec des outils diamantés. Selon la nature du substrat transparent 10, d'autres méthodes d'usinage sont possibles. Par exemple, avec un substrat en quartz on peut par exemple effectuer un usinage photochimique.

Comme on le voit à la figure 4, le tour d'heures 5 et l'évidemment 13 sont recouvert de couches d'émail 23. Ces couches d'émail 23 sont obtenues par les techniques connues comprenant plusieurs étapes consistant en un trempage, une pulvérisation, un tamponnage ou une sérigraphie pour appliquer une composition d'émail déterminée, et en un passage au four après chaque étape jusqu'à obtenir l'épaisseur voulue. La température de cuisson est comprise entre 700°C et 1300°C selon la nature de la composition d'émail. Pour éviter une dépression des couches d'émail au niveau du trou d'axe 3, il est possible de prévoir un insert provisoire (non représenté) résistant à la chaleur, par exemple un insert en céramique, ledit insert étant ensuite éliminé dans l'étape de finition. L'étape de finition consiste à polir les deux faces avec une meule ou un papier abrasif à grains fins (9 à 15 µm) pour arriver aux cotes souhaitées, puis à effectuer un dernier passage au four pour obtenir un glaçage de la surface émaillée.

Comme on le voit, les couches d'émail 27 situées au centre du cadran sont épaisses, par exemple 0,4 mm, et peuvent être opaques à la lumière en fonction des pigments entrant dans la composition de l'émail. La teinte visible par l'observateur sera donc celle de l'émail. Au contraire les couches d'émail 25 sur le tour d'heures sont minces, et suffisamment minces, par exemple 0,2 mm pour les rendre translucides et permettre de voir le substrat sous-jacent. Si on le souhaite, le substrat sous-jacent peut comporter des marques ou des décorations, telles que des index horaires 4, formées par exemple par métallisation, préalablement aux étapes de formation des couches d'émail. La couche d'émail mince et translucide 25 permet donc de lire les indications portées par le tour d'heures sur un fond correspondant à la teinte choisie pour l'émail. Il est bien entendu possible, comme cela est connu depuis longtemps, de rapporter des marques ou des décorations à la surface de l'émail, voire de combiner les deux possibilités pour augmenter les choix esthétiques.

On observera également que la même pièce fabriquée comme indiqué ci-dessus peut présenter pour l'observateur deux aspects différents selon la façon dont le cadran 1 est monté dans le boîtier. Si on oriente la face émaillée 11 côté observateur, l'aspect de la zone opaque 27 et de la zone translucide 25 sera brillant. Si au contraire on oriente la face non émaillée 12 côté observateur, l'interface entre le substrat transparent 10 et les couches d'émail 25, 27 donnera un aspect un peu granuleux. Ainsi l'invention permet, avec une même ligne de fabrication de cadrans, de produire deux collections de montres-bracelets différentes.

Une fois le cadran terminé, ou avant le dernier passage au four pour glaçage, il est possible comme représenté sur la figure 5, de découper un large passage traversant formant le guichet 6 permettant de voir les informations portées par le disque de quantième 7, ou par tout autre support.

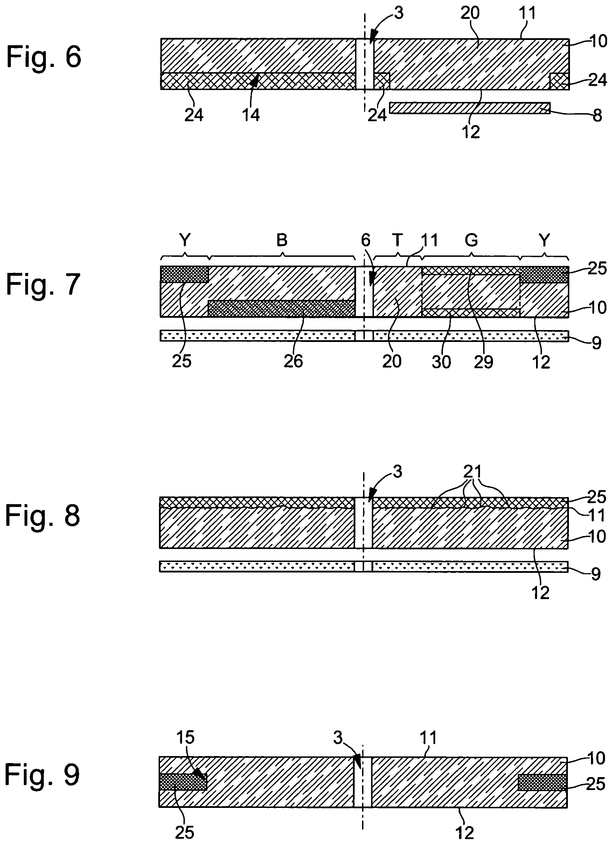

En se référant maintenant à la figure 6, on a représenté en coupe un deuxième exemple de réalisation qui diffère de l'exemple de réalisation précédent en ce que le substrat monocristallin transparent 10 est usinée sur la face 12 opposée à la face directement visible par un observateur. Les zones 14 sont usinées en creux et garnies de couches d'émail pour former une couche épaisse opaque 24 ne débordant pas en dehors des parties usinées en creux, en laissant ainsi des zones 20 dépourvues de tout revêtement d'émail et donc totalement transparentes. Le contour de ces zones transparentes 20 peut être prévu pour permettre de voir une partie du mécanisme, telle qu'un tourbillon représenté schématiquement par la référence 8.

A la figure 7 on a représenté un troisième exemple de réalisation qui est en quelque sorte une synthèse des exemples de réalisation précédemment décrits et qui comporte un éclairage arrière symbolisé par une feuille électroluminescente 9. La face supérieure 11 orientée vers un observateur est usinée en creux pour permettre le dépôt de couches d'émail minces 25 et le dépôt de couches d'émail ultraminces 29, par exemple 0,1 mm. Certaines zones de la surface supérieure 11 sont dépourvues de dépôts d'émail et on suppose que l'émail utilisé a une première couleur, par exemple jaune (Y). La face inférieure 12 est également usinée en creux pour permettre des dépôts de couches d'émail minces 26 et ultraminces 30, l'émail utilisé ayant une deuxième couleur, par exemple bleu (8). Dans la partie située à gauche du trou d'aiguilles 3 les zones émaillées supérieure 25 et inférieures 26 sont juxtaposées et les couleurs visibles par un observateur seront le jaune (Y) et le bleu (B). La partie située à droite du trou d'aiguilles 3 comporte une zone entièrement transparente, une zone où les dépôts ultraminces supérieurs 29 et inférieurs 30 se superposent pour donner par mélange des deux couleurs primaires la couleur verte (G), et une zone de la surface supérieure où le dépôt d'émail ultramince 29 est jointif avec le dépôt d'émail mince 25.

Pour une meilleure compréhension des dessins, les dépôts d'émail mince et ultramince ont été représentés avec des épaisseurs constantes, c'est-à-dire avec des évidements ayant un fond parallèle aux surfaces du substrat transparent 10. Il est bien évident qu'il n'y a aucune difficulté technique à réaliser les fonds des évidements avec une surface inclinée faisant varier progressivement l'épaisseur des couches d'émail. Cette variante de réalisation non représentée permet d'avoir des nuances d'une même couleur ou un dégradé entre deux couleurs différentes lorsque des dépôts d'émail sont effectués sur les deux faces du substrat transparent et présentent des zones de recouvrement. De même, et notamment lorsqu'une face comporte des évidements disjoints, il est possible d'avoir plus d'une couleur d'émail sur la même face, voire de créer un émaillage cloisonné. La figure 8 illustre un quatrième exemple de réalisation qui peut également être combiné avec les exemples de réalisations précédents. Dans cet exemple de réalisation une des surfaces, la surface supérieure 11, a une structuration 21 effectuée par laser pour dessiner un hologramme puis elle est revêtue de couches minces d'émail, ledit hologramme pouvant être observé par réflexion ou par transmission si on prévoit une éclairage arrière 9.

Le cadran d'une montre-bracelet a été donné uniquement à titre d'exemple, l'emploi d'une pièce réalisée selon l'invention n'étant pas limité au domaine horloger. Une telle pièce peut être incorporé dans n'importe quel type de boîtier pour lequel il est souhaitable d'avoir un panneau au moins partiellement transparent. Elle peut par exemple constituer la glace de fermeture du couvercle d'un coffret à bijoux.

Selon un mode de réalisation de l'invention représenté à la figure 9, le dépôt d'émail 25 est effectué dans une gorge 15 usinée dans l'épaisseur du substrat transparent 10, selon les techniques indiquées précédemment. Ce mode de réalisation a l'avantage de rendre invisibles les porosités dans la masse d'émail, de faciliter les opérations d'usinage et de polissage, y compris au niveau de l'ouverture de la gorge 15.

Ce mode de réalisation peut avantageusement être combiné avec les examples de réalisations précédemment décrits. L'émail déposé dans la gorge peut par exemple avoir une première teinte et correspondre au tour d'heure et des évidements, formés sur la face arrière du cadran aux positions 3h, 6h, 9h, 12h, être garnis d'un émail d'une deuxième teinte pour mieux faire ressortir ces positions horaires.

## Revendications

1. Pièce à usage technique et/ou décoratif comprenant un substrat (10) transparent ayant une forme générale plane et dans l'épaisseur duquel est formée une gorge (15) latérale dans laquelle sont effectués des dépôts (25) opaques, translucides ou transparents, colorés ou non, les dépôts (25) étant constitués par des couches d'émail, le substrat transparent (10) étant réalisé en un matériau résistant à une température supérieure à 500°C, à savoir un matériau mono- ou poly-cristallin dont la température de cristallisation est supérieure à 500° C, ou un matériau amorphe dans la mesure où son point de ramollissement est supérieur à la température nécessaire pour effectuer le dépôt d'émail.

2. Pièce selon la revendication 1, **caractérisée en ce que** le substrat (10) transparent comprend au moins une face (11, 12) dans laquelle est réalisé un évidement dans lequel sont effectués des dépôts (23 à 30) supplémentaires opaques, translucides ou transparents colorés ou non, **en ce que** le substrat transparent (10) est réalisé en un matériau conservant sa forme à une température supérieure à 500°C, et **en ce que** lesdits dépôts (23 à 30) supplémentaires opaques ou translucides sont constitués par des couches d'émail.

3. Pièce selon l'une quelconque des revendications 1 ou 2, **caractérisée en ce que** le matériau transparent formant le substrat est un matériau mono ou polycristallin par exemple un quartz, un spinelle ou un corindon.

4. Pièce selon la revendication 3, **caractérisée en ce que** le matériau constituant le substrat est un saphir.

5. Pièce selon l'une quelconque des revendications 1 ou 2, **caractérisée en ce que** le matériau transparent formant le substrat est un matériau amorphe, tel qu'un verre minéral.

6. Pièce selon l'une des revendications 2 à 5, **caractérisée en ce que** le substrat (10) transparent comporte sur au moins une de ses faces des évidements (13,14) permettant de faire varier l'épaisseur des couches supplémentaires d'émail pour en faire varier la nuance d'une teinte d'émail donnée, voire pour les rendre translucides.

7. Pièce selon l'une quelconque des revendications 2 à 6, **caractérisée en ce que** les couches supplémentaires d'émail sont formées sur la face visible (11) de ladite pièce.

8. Pièce selon l'une quelconque des revendications 2 à 6, **caractérisée en ce que** les couches supplémentaires d'émail sont formées sur la face (12) de la pièce opposée à la face visible (11).

9. Pièce selon l'une quelconque des revendications 2 à 6, **caractérisée en ce que** les couches supplémentaires d'émail sont formées sur les deux faces (11 et 12) de la pièce.

10. Pièce selon la revendication 9, **caractérisée en ce que** les couches supplémentaires d'émail de la face visible (11) occupent des zones complémentaires de celles occupées par les couches supplémentaires d'émail de la face opposée (12).

11. Pièce selon la revendication 9, **caractérisée en ce que** les couches supplémentaires d'émail de la face visible (11) et celles de la face opposée (12) présentent des zones de recouvrement.

12. Pièce selon les revendications 10 ou 11, **caractérisée en ce que** la couche supplémentaire d'émail de la face visible (11) a une teinte différente de celle de la couche supplémentaire d'émail de la face opposée (12).

13. Pièce selon la revendication 1, **caractérisé en ce qu'**une face visible (11) du substrat transparent (10) est structurée et revêtue de couches d'émail translucides pour former un hologramme (21).

14. Pièce selon l'une quelconque des revendications 1 ou 2, **caractérisée en ce qu'**elle comporte en outre un passage (6) traversant à la fois le substrat transparent et les couches supplémentaires d'émail.

15. Pièce selon l'une quelconque des revendications 1 ou 2, **caractérisée en ce que** certaines zones destinées à recevoir des couches d'émail sont revêtues de marques ou de décorations (4) par métallisation.

16. Pièce selon l'une quelconque des revendications 1 ou 2, **caractérisée en ce qu'**elle comporte un éclairage arrière (9) dans les zones où le substrat est entièrement transparent ou comporte des couches d'émail translucides.

17. Pièce selon la revendication 16, **caractérisée en ce que** l'éclairage arrière (9) est choisi parmi les diodes et les éléments électroluminescents.

18. Pièce selon l'une quelconque des revendications précédentes, **caractérisée en ce qu'**elle constitue le cadran d'une pièce d'horlogerie.

19. Procédé de fabrication d'une pièce à usage technique et/ou décoratif comprenant un substrat transparent (10) ayant une forme généralement plane et étant réalisé en un matériau conservant sa forme à une température supérieure à 500°C, à savoir un matériau mono- ou poly-cristallin dont la température de cristallisation est supérieure à 500°C, ou un matériau amorphe dans la mesure où son point de ramollissement est supérieur à la température nécessaire pour effectuer le dépôt d'émail, et dans l'épaisseur duquel sont effectués des dépôts (25) constitués par des couches d'émail opaques ou translucides, comportant les étapes consistant à
- usiner une gorge (15) latérale dans l'épaisseur du substrat;
- par une succession de dépôts et cuissons remplir la gorge (15) desdits dépôts d'émail et
- effectuer un polissage des zones comportant un dépôt d'émail.

20. Procédé selon la revendication 19, **caractérisé en ce que** l'on usine un évidement (13, 14) dans au moins une face (11, 12) du substrat transparent (10) ou **en ce que** l'on effectue une structuration de ladite face (11, 12) et **en ce que**, par une succession de dépôts de couches supplémentaires d'émail et cuissons, on remplit l'évidement (13, 14) et/ou on recouvre toute la surface de la face éventuellement structurée (21).

21. Procédé selon l'une quelconque des revendications 19 ou 20, **caractérisé en ce que** le matériau constituant le substrat transparent (10) est choisi parmi les matériaux capables de résister à une température de préférence comprise entre 700°C et 1300°C.

22. Procédé selon la revendication 21, **caractérisé en ce que** le matériau constituant le substrat transparent (10) est du saphir.

## Patentansprüche

1. Bauteil zur technischen und/oder verzierenden Verwendung, umfassend ein lichtdurchlässiges Substrat (10), das eine im Wesentlichen ebene Form besitzt und in dessen Dicke eine seitliche Ausnehmung (15) ausgebildet ist, in der lichtundurchlässige, durchscheinende oder lichtdurchlässige, gefärbte oder nicht gefärbte Ablagerungen (25) vorgenommen sind, wobei die Ablagerungen (25) durch Emaille-Schichten gebildet sind und das lichtdurchlässige Substrat (10) aus einem Material gebildet ist, das bei einer Temperatur von mehr als 500 °C beständig ist, nämlich aus einem mono- oder polykristallinen Material, dessen Kristallisationstemperatur höher als 500 °C ist, oder aus einem amorphen Material, sofern sein Erweichungspunkt höher als die zur Durchführung der Emaille-Ablagerung erforderliche Temperatur ist.

2. Bauteil nach Anspruch 1, **dadurch gekennzeichnet, dass** das lichtdurchlässige Substrat (10) mindestens eine Fläche (11, 12) aufweist, in der eine Aussparung ausgebildet ist, in der zusätzliche lichtundurchlässige, durchscheinende oder lichtdurchlässige, gefärbte oder nicht gefärbte Ablagerungen (23 bis 30) vorgenommen sind, dass das lichtdurchlässige Substrat (10) aus einem Material gebildet ist, das seine Form bei einer Temperatur von mehr als 500 °C beibehält, und dass die zusätzlichen lichtundurchlässigen oder durchscheinenden Ablagerungen (23 bis 30) durch Emaille-Schichten gebildet sind.

3. Bauteil nach einem der Ansprüche 1 oder 2, **dadurch gekennzeichnet, dass** das lichtdurchlässige Material, das das Substrat bildet, ein mono- oder polykristallines Material, beispielsweise Quarz, Spinell oder Korund, ist.

4. Bauteil nach Anspruch 3, **dadurch gekennzeichnet, dass** das Material, das das Substrat bildet, Saphir ist.

5. Bauteil nach einem der Ansprüche 1 oder 2, **dadurch gekennzeichnet, dass** das lichtdurchlässige Material, das das Substrat bildet, ein amorphes Material wie etwa ein Mineralglas ist.

6. Bauteil nach einem der Ansprüche 2 bis 5, **dadurch gekennzeichnet, dass** das lichtdurchlässige Substrat (10) auf mindestens einer seiner Flächen Aussparungen (13, 14) aufweist, die ermöglichen, die Dicken der zusätzlichen Emaille-Schichten zu variieren, um dadurch die Nuancierung eines gegebenen Emaille-Farbtons zu variieren, um sie sogar durchscheinend zu machen.

7. Bauteil nach einem der Ansprüche 2 bis 6, **dadurch gekennzeichnet, dass** die zusätzlichen Emaille-Schichten auf der sichtbaren Fläche (11) des Bauteils ausgebildet sind.

8. Bauteil nach den Ansprüchen 2 bis 6, **dadurch gekennzeichnet, dass** die zusätzlichen Emaille-Schichten auf der Fläche (12) des Bauteils gegenüber der sichtbaren Fläche (11) ausgebildet sind.

9. Bauteil nach einem der Ansprüche 2 bis 6, **dadurch gekennzeichnet, dass** die zusätzlichen Emaille-Schichten auf den zwei Flächen (11 und 12) des Bauteils ausgebildet sind.

10. Bauteil nach Anspruch 9, **dadurch gekennzeichnet, dass** die zusätzlichen Emaille-Schichten der sichtbaren Fläche (11) komplementäre Bereiche zu denjenigen Bereichen belegen, die von den zusätzlichen Emaille-Schichten der gegenüberliegenden Fläche (12) belegt sind.

11. Bauteil nach Anspruch 9, **dadurch gekennzeichnet, dass** die zusätzlichen Emaille-Schichten der sichtbaren Fläche (11) und jene der gegenüberliegenden Fläche (12) Überdeckungsbereiche aufweisen.

12. Bauteil nach den Ansprüchen 10 oder 11, **dadurch gekennzeichnet, dass** die zusätzliche Emaille-Schicht der sichtbaren Fläche (11) einen anderen Farbton als jene der zusätzlichen Emaille-Schicht der gegenüberliegenden Fläche (12) besitzt.

13. Bauteil nach Anspruch 1, **dadurch gekennzeichnet, dass** eine sichtbare Fläche (11) des lichtdurchlässigen Substrats (10) mit durchscheinenden Emaille-Schichten strukturiert und beschichtet ist, um ein Hologramm (21) zu bilden.

14. Bauteil nach einem der Ansprüche 1 oder 2, **dadurch gekennzeichnet, dass** es ferner einen Durchlass (6) aufweist, der zugleich durch das lichtdurchlässige Substrat und durch die zusätzlichen Emaille-Schichten verläuft.

15. Bauteil nach einem der Ansprüche 1 oder 2, **dadurch gekennzeichnet, dass** bestimmte Bereiche, die dazu vorgesehen sind, Emaille-Schichten aufzunehmen, durch Metallisierung mit Markierungen oder Verzierungen (4) beschichtet sind.

16. Bauteil nach einen der Ansprüche 1 oder 2, **dadurch gekennzeichnet dass** es eine Hintergrundbeleuchtung (9) in den Bereichen aufweist, in denen das Substrat vollständig lichtdurchlässig ist, oder durchscheinende Emaille-Schichten aufweist.

17. Bauteil nach Anspruch 16, **dadurch gekennzeichnet, dass** die Hintergrundbeleuchtung (9) aus Dioden und Elektrolumineszenzelementen gewählt ist.

18. Bauteil nach einem der vorhergehenden Ansprüche, **dadurch gekennzeichnet, dass** es das Zifferblatt eines Zeitmessgeräts bildet.

19. Verfahren zum Herstellen eines Bauteils zur technischen und/oder verzierenden Verwendung, umfassend ein lichtdurchlässiges Substrat (10), das eine im Wesentlichen ebene Form besitzt und aus einem Material gebildet ist, das seine Form bei einer Temperatur von mehr als 500 °C beibehält, nämlich aus einen mono- oder polykristallinen Material, dessen Kristallisationstemperatur höher als 500 °C ist, oder aus einem amorphen Material, sofern sein Erweichungspunkt höher als die zur Durchführung der Emaille-Ablagerung erforderliche Temperatur ist, und in dessen Dicke Ablagerungen (25) vorgenommen sind, die durch lichtundurchlässige oder durchscheinende Emaille-Schichten gebildet sind, umfassend die Schritte, die darin bestehen:
- in der Dicke des Substrats eine seitliche Ausnehmung (15) auszuarbeiten;
- durch eine Abfolge von Ablagerungen und Brennvorgängen die Ausnehmung (15) mit den Emaille-Ablagerungen zu füllen; und
- ein Polieren der Bereiche, die eine Emaille-Ablagerung aufweisen, vorzunehmen.

20. Verfahren nach Anspruch 19, **dadurch gekennzeichnet, dass** in mindestens einer Fläche (11, 12) des lichtdurchlässigen Substrats (10) eine Aussparung (13, 14) ausgearbeitet wird oder eine Strukturierung der Fläche (11, 12) vorgenommen wird und dass durch eine Abfolge von Ablagerungen von zusätzlichen Emaille-Schichten und Brennvorgängen die Aussparung (13, 14) gefüllt wird und/oder die gesamte Oberfläche der eventuell strukturierten Fläche (21) abgedeckt wird.

21. Verfahren nach einem der Ansprüche 19 oder 20, **dadurch gekennzeichnet, dass** das Material, das das lichtdurchlässige Substrat (10) bildet, aus Materialien gewählt ist, die fähig sind, einer Temperatur zu widerstehen, die vorzugsweise im Bereich von 700 °C bis 1300 °C liegt.

22. Verfahren nach Anspruch 21, **dadurch gekennzeichnet, dass** das Material, das das lichtdurchlässige Substrat (10) bildet, Saphir ist.

## Claims

1. Piece for technical and/or decorative use including a transparent substrate (10) with a generally flat shape and in the thickness of which is formed a lateral groove (15) in which there are carried out opaque, translucent or transparent depositions (25) that may or may not be coloured, the depositions (25) being made of enamel layers, the transparent substrate (10) being a material resistant to temperatures higher than 500°C, namely a mono- or polycrystalline material whose crystallisation temperature is higher than 500°C, or an amorphous material provided that its softening point is higher than the temperature necessary for carrying out the enamel deposition.

2. Piece according to claim 1, **characterized in that** the transparent substrate (10) includes at least one face (11, 12) in which is formed a recess in which there are carried out additional opaque, translucent or transparent depositions (23 to 30) that may or may not be coloured, **in that** the transparent substrate (10) is a material which keeps its shape at a temperature higher than 500°C, and **in that** said additional opaque or translucent depositions (23 to 30) are formed by enamel layers.

3. Piece according to any of claims 1 or 2, **characterized in that** the transparent material forming the substrate is a mono or polycrystalline material , for example quartz, spinelle or corundum.

4. Piece according to claim 3, **characterized in that** the material forming the substrate is a sapphire.

5. Piece according to any of claims 1 or 2, **characterized in that** the transparent material forming the substrate is an amorphous material, such as a mineral glass.

6. Piece according to any of claims 2 to 5, **characterized in that** the transparent substrate (10) includes on at least one of the surfaces thereof recesses (13, 14) for varying the thickness of the additional enamel layers to vary the hue of a given enamel shade, or to make said enamel layers translucent.

7. Piece according to any of claims 2 to 6, **characterized in that** the additional enamel layers are formed on the visible face (11) of said piece.

8. Piece according to claims 2 to 6, **characterized in that** the additional enamel layers are formed on the face (12) of the piece opposite the visible face (11).

9. Piece according to any of claims 2 to 6, **characterized in that** the enamel layers are formed on both faces (11 and 12) of the piece.

10. Piece according to claim 9, **characterized in that** the additional enamel layers of the visible face (11) occupy complementary zones to those occupied by the additional enamel layers of the opposite face (12).

11. Piece according to claim 9, **characterized in that** the additional enamel layers of the visible face (11) and those of the opposite face (12) have overlapping zones.

12. Piece according to claim 10 or 11, **characterized in that** the additional enamel layer of the visible face (11) has a different shade to that of the additional enamel layer of the opposite face (12).

13. Piece according to claim 1, **characterized in that** a visible face (11) of the transparent substrate (10) is structured and coated with translucent enamel layers to form a hologram (21).

14. Piece according to any of claims 1 or 2, **characterized in that** it further includes a passage (6) passing through both the transparent substrate and the additional enamel layers.

15. Piece according to any of claims 1 or 2, **characterized in that** certain zones intended to receive enamel layers are coated with markings or decorations (4) by metallizing.

16. Piece according to any of claims 1 or 2, **characterized in that** it includes back lighting (9) in the zones where the substrate is entirely transparent or includes translucent enamel layers.

17. Piece according to claim 16, **characterized in that** the back lighting (9) is chosen from among diodes and light emitting elements.

18. Piece according to any of the preceding claims, **characterized in that** it forms the dial of a timepiece.

19. Method of manufacturing a piece for technical and/or decorative use including a transparent substrate (10) with a generally flat form and being made of a material keeping its shape at a temperature higher than 500°C, namely a mono- or polycrystalline material whose crystallisation temperature is higher than 500°C, or an amorphous material provided that its softening point is higher than the temperature necessary for carrying out the enamel deposition, and in the thickness of which depositions (25) are carried out formed by opaque, translucent or transparent enamel layers, including the steps of:
- machining a lateral groove (15) in the thickness of the substrate;
- via a succession of depositions and firings, filling the groove (15) with the said enamel layers, and
- polishing the zones including an enamel deposition.

20. Method according to claim 19, **characterized in that** a recess (13, 14) is machined in at least one face (11, 12) of the transparent substrate (10) or **in that** the said face (11, 12) is structured, and **in that**, via a succession of additional enamel layers depositions and firings, the recess (13, 14) is filled and/or all the surface of the face (21) eventually structured is covered.

21. Method according to any of claims 19 or 20, **characterized in that** the material forming the transparent substrate (10) is selected from among materials capable of resisting temperatures preferably comprised between 700°C and 1300°C.

22. Method according to claim 21, **characterized in that** the material forming the transparent substrate (10) is sapphire.
